(19) Europäisches Patentamt / European Patent Office / Office européen des brevets

(11) **EP 2 631 860 B1**

(12) **EUROPEAN PATENT SPECIFICATION**

(45) Date of publication and mention
of the grant of the patent:
**24.02.2016 Bulletin 2016/08**

(51) Int Cl.:
**G06Q 20/20** (2012.01)   **G06Q 20/32** (2012.01)
**G06Q 20/42** (2012.01)   **G07G 1/00** (2006.01)
**G07G 1/01** (2006.01)   **G07G 1/12** (2006.01)

(21) Application number: **12156870.3**

(22) Date of filing: **24.02.2012**

(54) **Sending a 2D code via a hardware interface of a Pin-Pad**

Senden eines 2D-Codes über eine Hardware-Schnittstelle eines Geheimzahl-Tastenfelds

Envoi de code 2D par interface matérielle d'un clavier NIP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.08.2013 Bulletin 2013/35**

(73) Proprietor: **POSPartner GmbH**
**53639 Königswinter (DE)**

(72) Inventors:
- **Marra, Andreas**
  **47799 Krefeld (DE)**
- **Lohmann, Karl**
  **48599 Gronau (DE)**
- **Witkowski, Roland**
  **53639 Königswinter (DE)**

- **Reich, Peter**
  **53639 Königswinter (DE)**

(74) Representative: **Richardt Patentanwälte PartG
mbB**
**Wilhelmstraße 7**
**65185 Wiesbaden (DE)**

(56) References cited:
**EP-A1- 2 128 809       WO-A1-2006/000021**
**WO-A2-2007/127385   WO-A2-2011/130422**
**US-A1- 2011 251 892**

- **KEN GREEN: 'Programming Sharp's Memory
  LCDs', [Online] 01 October 2010, XP055188870
  Retrieved from the Internet:
  <URL:http://www.sharpmemorylcd.com/resourc
  e s/Programing_Memory_LCDs_AppNote.pdf>
  [retrieved on 2015-05-12]**

**Description**

**Field of the invention**

The invention relates to system and method for displaying data allowing a payment of a payment item, in particular a system being based on sending a 2D code via a hardware interface to a Pin-Pad for displaying said 2D code.

**Background and related art**

Credit cards and membership cards have become a widespread means of cash-less payment. However, the management of a plurality of these cards and corresponding PINs has become quite complicated, and further problems arise resulting from the danger of a fraudulent use of a credit card or its PIN by an unauthorized user. In addition it is very troublesome for both the customer and the issuer of the card to ensure that the card cannot be misused.

A further disadvantage of using credit cards is that in many cases credit card terminals and the corresponding credit cards have to physically interact with each other, e.g. for reading a magnetic stripe of the credit card comprising some banking account data of a customer. This may result in wearing down the credit card or the terminal.

The use of case credit cards bears the problem that personal data of the card holder has to be transferred to a payment terminal of the payee. In state of the art payment systems as used, for example, in supermarkets and various shops, personal data such as the bank account number/credit card number, the bank code number, the name and address of the customer and the like may be read from the credit card or a customer card and be transferred to the reading device of the owner of a shop. The transferred personal data may be used by the shop owner for initiating a payment transaction by sending a corresponding request to a server of the financial service provider. The transfer of personal data from a customer's credit card to the terminal of the payee is a security risk.

For example, DE19903822A1 describes a method for executing a cash-less payment being based on the usage of mobile phones, whereby personal data is transferred to a terminal of a vendor. US 2011/0137742 describes a payment method using product identifier codes.

This security risk does not only cause problems on the side of the customer, it also burdens the payee, e.g. the owner of a shop, to implement complex and expensive security measurements to ensure that the transferred personal data cannot be stolen or misused e.g. by the shops' personnel.

In addition, some specially adapted payment systems e.g. for trade fairs or exhibitions exist. Customers are provided with payment cards or 'payment tokens' for use in payment systems specially adapted for the needs of the respective trade fair or exhibition, but said specially adapted payment cards may not be applicable for legacy payment systems used by the vast majority of supermarkets and shops today. Any use of a specially adapted payment system would require the owner of a shop to invest in a new payment terminal infrastructure which might not be compatible with the payment cards used by each potential customer due to a lack of standardized communication interfaces.

US 20110251892 describes a system and method for using mobile devices to conduct payment transactions at merchant locations including brick and mortar locations and remote locations. A check out token is printed or otherwise displayed at the point of sale. The user of the mobile device selects a payment account and authorizes the payment transaction via his mobile phone.

Document XP055188870 is an information document of Sharp on how to program Sharp's Memory LCDs. It describes four commands that can be sent to a memory LCD panel, e.g. one command for writing a single line and another command for writing multiple lines of the display.

In JP 2002-109421A a payment method is described wherein a POS terminal displays an amount of money of commodities and an account number to be paid on a display unit as a code matrix pattern data based upon a QR code arrangement rule. Said pattern is read by a cell phone and forwarded to an automatic payment terminal. A disadvantage of said approach is the security risk arising from the transmission of bank account data. A further disadvantage of said method is that an LCD display is required which is not part of or compatible with many existing POS terminal systems.

Setting up a LCD display based POS terminal in thousands of shops and supermarkets would often require the shop owners to switch to a completely new hardware and terminal infrastructure for executing the payments. This is practically infeasible for financial and logistic reasons.

**Summary of invention**

It is an objective of embodiments of the invention to provide for an improved method and data processing system for the payment of a payment item. The objective is solved by the features of the independent claims. Preferred embodiments are given in the dependent claims. If not explicitly stated otherwise, embodiments of the invention can be freely combined with each other.

A **'payment item'** as used herein is a set of one or more goods or services for which a payment can be executed.

A good or service may be a piece of software, a car, a house, goods sold in a supermarket, an offered service contract, or the like. Thus, upon executing a payment for a payment item, a plurality of goods and/or services may be paid by a payer to a payee. The act of executing the payment as used herein is referred to as 'transaction'.

A **'Pin-Pad'** as used herein is a terminal device comprising a keypad, a display and a smart card reader. The original purpose of a Pin-Pad is to enable a user to enter a PIN without having to disclose said PIN to the shop assistant or to anyone else. Pin-Pads therefore often have some form of cover over the display, and sometimes even the keypad, to stop others from observing the PIN as entered, whereby the design typically takes into account in the physical layout of the environment in which the Pin-Pads is intended to be used. According to some embodiments, the Pin-Pad is implemented in accordance with the ISO 9564 specification. Pin-Pads are manufactured, for example, by Hypercom, Thales e-Transactions division, Ingenico, Sagem, VeriFone, ICP, ELME and CCV. Preferentially, the display of the terminal is positioned in a way that at least the customer and optionally also a cashier is enabled to view the display's content. According to embodiments, neither the number of field of the Pin-Pad nor the card reader component is used in the process of specifying and processing a payment order. Rather, the main component of a Pin-Pad employed by embodiments of the invention for executing a payment is the display of said Pin-Pad. A Pin-Pad comprises at least a hardware interface for communicating with a cash desk system. According to some embodiments, a Pin-Pad may in addition comprise a 'high level' interface. A 'high level' interface as used herein is any software interface providing for some payment related functionalities of the Pin-Pad in accordance with a standard which is not manufacturer specific and does not allow to directly access the hardware functionalities of a Pin-Pad. An example for a high level interface of a Pin-Pad is an 'ECR interface' or 'ZVT interface', said interface being based on a ZVT-protocol.

A **'mobile device'** as used herein is any mobile data processing device comprising a display, a camera, a network interface and data input means, e.g. a physical keyboard or a touch screen based keyboard. Said data input means enable a user of the mobile device to enter user data, e.g. login-data or an approval to the payment of a payment order, into the mobile device. According to preferred embodiments, the mobile device is a handheld mobile device. According to some embodiments, the mobile device is a cellular phone, e.g. a smart phone using e.g. IOS, Android or the like as operating system.

A **'2D Code',** also known as '2D bar code', as used herein is a two-dimensional pattern encoding information in a machine-readable form. A 2D code may be a bar code, a matrix code, in particular a QR code, or the like. A 2D code as used herein does not comprise human-readable, textual data represented e.g. in the form of the Latin or Greek character set. The size of the code may be specified e.g. in pixels, or by a combination of 'cm' or 'inches' with a resolution. The resolution of a 2D code is an indication of the number of pixels per code area.

A **'QR Code'** as used herein is an is a particular type of matrix barcode consisting of a pattern of black squares scattered over a white background. The information encoded can be made up of four standardized kinds ("modes") of data (numeric, alphanumeric, byte/binary, Kanji) or, by supported extensions, virtually any kind of data. According to some embodiments, the QR code is encrypted based on a cryptographic algorithms such as DES. The QR Code may e.g. be a Micro QR Code or a Standard QR Code.

A **'payment order'** as used herein is a data object comprising at least a specification of a payment amount to be paid for a payment item.

A **'cash desk system'** as used herein is any data processing system comprising a processor and a memory and being adapted for receiving a payment order. According to some embodiments, the cash desk system is adapted for receiving a manually entered payment order. According to other embodiments, the payment order is entered automatically or semi-automatically into the cash desk system, e.g. via a bar code scanner.

A **'CG-CR application program'** as used herein is any application program being adapted for generating and/or resolving a 2D code. Generating a 2D code comprises encoding input data and outputting a 2D code encoding said input data. Resolving a 2D code comprises decoding said input data from a received 2D code and returning the decoded data.

A **'hardware interface'** of a Pin-Pad as used herein encompasses any interface for directly accessing functionalities of the Pin-Pad's hardware or hardware components, e.g. its display, its number field, or the like. Typically, a hardware interface is a built-in interface and is defined and provided by a manufacturer of the Pin-Pad.

For example, the hardware interface of a Pin-Pad manufactured by Verifone can be implemented as a 'Verifone PP interface' as specified in the document "Design Specification External User interface HSM-CDF" (Verifone, version 01.64, dated November 24th, 2009, document ID: GE002105). Alternatively, a Verifone Pin-Pad may comprise a 'Verifone HT interface' as specified in document 'Electronic Cash Register/Self service Machine' (Verifone, version 04.13 dated November 18th, 2011, document ID:PRD 0200-3-001-12PT). Both hardware interfaces make use of the HSM-CDF command set. The hardware interface of a Pin-Pad manufactured by Ingenico, the 'Ingenico interface', is specified in the document 'Extended PinPad Interface' (Ingenico, version 1.4.3 dated August 8th, 2011). Said hardware interface is based on the ASN1 command set.

Thus, said hardware interface is a low-level, hardware centric interface for accessing hardware functions. It is not a 'high-level' interface for accessing payment related functions provided by a software running on the Pin-Pad. In particular, a hardware interface is not based on a ECR-Interface Protocol such as, for example, a ZVT protocol.

A **'display'** of the Pin-Pad is a built-in display of the Pin-Pad's hardware. According to some embodiments, the size of the display is 128x64 pixel being addressable via a manufacturer specific protocol of the hardware interface of the Pin-Pad.

A **'GUI element'** is a data object some of which's attributes specify the shape, layout and/or behavior of said GUI element if displayed on a display. A GUI element can be a standard GUI element such as a button, a text box, a tab, an icon, a text field, a pane, a check-box item or item group or the like. A GUI element can likewise be an image, an alphanumeric character or any combination thereof.

In the following, method steps described in respect to a computer implemented method of embodiments of the invention should be considered as a description of analogous capabilities and functionalities of a corresponding cash desk system, mobile device and/or CG-CR server and their respective computer readable storage media comprising instructions for executing said functions.

In one aspect, the invention relates to a computer-implemented method for the display of data, said data allowing a payment of a payment item by means of a Pin-Pad connected to a cash desk system. The method comprises:

- receiving, by a first application program of the cash desk system, a payment order for the payment of the payment item, the payment order comprising an indication of the payable amount;
- sending a 2D code by the first application program via a hardware interface of the Pin-Pad to the Pin-Pad for displaying said 2D code on a display of the Pin-Pad. The 2D code encodes a transaction ID and the payable amount. The transaction ID is particular to the received payment order. The transaction ID may be a purchase order number, an ID of a sales receipt, or the like.

Said features may be advantageous, as they may render the acquisition of additional hardware for executing a payment transaction unnecessary. Displaying a 2D code in accordance with the claimed method may be advantageous as said display method does not require the presence of specialized display hardware equipment such as an LCD display. Such kinds of displays are not available in many of the existing point of sale systems (POS systems) for multiple reasons. LCD display based systems may not be compatible to existing cash desk systems, they require considerable financial investments for integrating such displays, and in many cases there is simply not enough space at a cashier's desk for additional hardware such as an LCD display. Embodiments of the invention, by making use of hardware components (Pin-Pad displays) which were never designed for the display of graphical data but were rather designed purely for the purpose of displaying texts, allow to make use of hardware components existing at almost every cash desk system today in order to allow a secure, electronic and contactless payment of a payment item. Said method is secure, because using a 2D code encoding payment order related data allows to protect sensitive personal data from prying eyes. Thus, by exploiting existing hardware interfaces in Pin-Pads for displaying graphical data such as a 2D code, a secure way of executing a contactless payment transaction is provided which does not require the acquisition of additional hardware such as an LCD display. Thus, according to embodiments, the original function and purpose of a Pin-Pad, i.e., the secure entry of a PIN, is not used for executing a payment of a payment item, thereby avoiding security problems relating to the communication of the entered PIN. At the same time, the acquisition of new hardware can be avoided.

A display originally designed for the sole purpose of displaying text data for prompting a user to enter his PIN and acknowledging the entry of the PIN is used, according to embodiments of the invention, purely as a display means for displaying a 2D code.

According to preferred embodiments, the 2D code is a QR code. This may be advantageous as a QR code may encode data redundantly, thus allowing a particular fail-safe communication of data.

According to embodiments, the method further comprises:

- sending the payment order from the first application program to a CG-CR application program, the CG-CR application program being an application program running on a first server connected to the cash desk system via a network; the network may be, for example, the Internet;
- upon receipt of the payment order by the CG-CR application program, generating the transaction ID and the 2D code by the CG-CR application program; the 2D code encodes the transaction ID and the payable amount; and
- sending the 2D code by the CG-CR application program to the first application program for enabling said first application program to send the 2D code to the Pin-Pad.

Said features may be advantageous, because no bank account data, i.e., no sensitive personal data, is communicated from the mobile device to the cash desk system or from the cash desk system to the mobile device. Only transactional, i.e., payment order related data, is communicated via the 2D code. According to preferred embodiments, the information which bank account relates to a particular user of the mobile device, e.g. a customer, and which bank account relates to a particular payee, typically the owner and/or operator of the cash desk system, is stored in a central mapping accessible by the CG-CR application program. Said information may be transferred to the CG-CR server in an initial registration action executed by the user of the mobile device and the payee respectively. After having deposed said sensitive personal bank account data once upon registration, a user ID of the user of the mobile device or a payee ID of the operator of the cash desk system communicated to the CG-CR server suffice for determining said sensitive bank account data on the side of the CG-CR server by means of said mapping. Thus, said bank account data does not have to be transferred for each single payment transaction.

According to embodiments, the method further comprises:

- receiving, by the first application program, the 2D code from the CG-CR application program, whereby the 2D code is of a predefined size and resolution;
- determining a type of the hardware interface of the Pin-Pad; said determination may be based on evaluating a configuration of the first application program and/or on evaluating a configuration of the Pin-Pad; the determination may alternatively be based on sending a request to the Pin-Pad for returning a device-type ID or the like; and
- modifying the size and/or resolution of the 2D code in accordance with requirements imposed by the determined hardware interface type. According to said embodiment, the step of sending the 2D code to the Pin-Pad is implemented as sending the modified 2D code to the Pin-Pad.

According to embodiments, the method further comprises:

- reading the 2D code displayed on the display of the Pin-Pad by a camera of a mobile device of a user; said mobile device may be a handheld mobile device, in particular, a cellular phone;
- evaluating the read 2D code by a payment application program of the mobile device for extracting at least the payable amount and the transaction ID;
- displaying the extracted payment amount on the display of the mobile device;
- receiving a signal from the user being indicative of the user approving to the payment of the displayed payment amount; and
- upon receipt of the signal, sending a request from the payment application program to the CG-CR application program for initiating the payment of the payment order, the request comprising at least the extracted transaction ID and a user-ID of the user.

The payment application program may be implemented, e.g. as an Android app of a mobile phone using Android as its operating system, as an IPhone app running on an IPhone or the like. According to embodiments the 2D code is communicated in an encrypted form whereby the encryption and decryption of the 2D code is executed by the payment application program of the mobile device.

Said features may be advantageous as the user has full control to decide if he wants to trigger the execution of the payment or not. Thereby, no personal data is ever transferred to or from the mobile device. The user may select a GUI element such as a button or a link displayed on the display of the mobile device for generating the signal being indicative of the user approving to the payment of the displayed payment amount.

According to embodiments, the computer-implemented method further comprises a step of prompting, by the payment application, the user to enter log-in data for authenticating the user at the CG-CR application program. Depending on the embodiment, the user may be prompted to enter his username and password or to provide biometric data for authenticating the user at the CG-CR application program running on the CG-CR server. According to embodiments of the invention, the payment application program running on the mobile device receives the log-in data entered by the user into the mobile device, forwards the received log-in data to the CG-CR application program, and receives a message from said CG-CR application program. Said message is indicative of whether the user successfully authenticated at the CG-CR application program or not, or if a timeout occurred; depending on the embodiment, the user may be prompted for entering the log-in data upon each start of the payment application and/or upon each receipt of a 2D code from the first application. The method further comprises a step of sending the log-in data to the CG-CR application program via an encrypted network connection.

According to further embodiments, the CG-CR application program further executes the following steps:

- storing the transaction ID in association with the payment amount and in association with a payee-ID in a mapping; depending on the embodiment, said mapping may be implemented e.g. as a mapping file, as a relational database, as a directory of files or the like.
- receiving the request from the mobile device;
- extracting the transaction ID and the user-ID from the received request;
- evaluating the mapping for determining the payment amount and the payee-ID stored in association with the extracted transaction ID;

- evaluating a database of first and second banking accounts, the first banking accounts being banking accounts of registered users, the second banking accounts being banking accounts of registered payees for determining a first banking account of the user identified by the extracted user-ID and for determining a second banking account of a payee identified by the determined payee-ID; and
- sending a payment request for executing the payment of the payment order to a second server, said payment request comprising the payable amount and the first and second banking accounts, the execution of the payment to be executed by the second server.

As was explained previously, making use of a mapping of user-IDs and payee IDs for identifying banking accounts of registered users and payees may be advantageous as sensitive banking account data is not required any more to be communicated upon each single transaction/payment order form an end-user device of the payer or payee to the respective server of a financial service provider. Rather, only user IDs and payee IDs are forwarded to a CG-CR server which may use said IDs for determining the banking accounts and for triggering the execution of the payment by a second server. Said second server may be a server of a financial services provider, e.g. a banking services provider like, for example, PayPal. The communication between the CG-CR server and the server of the financial services provider may be protected, e.g. by using data encryption and/or by placing the CG-CR server within the same data center as the server of the financial services provider actually executing the payment transaction.

According to embodiments, the CG-CR application program receives a result message from the second server, the result message being indicative of a successful or unsuccessful execution of the execution of the payment, or of a timeout; then, the CG-CR application program forwards the result message to the payment application program and/or to the first application. Said features may be advantageous as both the payee as well as the payer may be informed on the execution of the payment.

According to embodiments, the first application program further executes the following steps:

- evaluating a configuration for determining if the cash desk system is connected to a Pin-Pad comprising a ECR-interface (302) in addition to the hardware interface;
- in case the cash desk system is determined to be connected to said Pin-Pad comprising the ECR interface, automatically deactivating a cash desk system internal ECR interface, said cash desk system internal ECR interface being adapted for transferring data to and from the ECR interface (302), activating a cash desk system internal hardware interface (236) of the cash desk system, and selectively using said cash desk system internal hardware interface by the first application program for exchanging data with said Pin-Pad.

According to embodiments, the sending of the payment order to the first server and the sending of the generated 2D code from the CG-CR application program to the first application program is executed via an encrypted communication channel. Said encrypted communication channel may be a https connection or the like.

In a further aspect, the invention relates to a computer-readable non-transitory storage medium of a cash desk system. The storage medium comprises instructions which, when executed by a processor of the cash desk system cause the processor to execute a method comprising: receiving, by a first application program of the cash desk system, a payment order for the payment of a payment item, the payment order comprising an indication of the payable amount; and sending a 2D code by the first application program via a hardware interface of a Pin-Pad connected to the cash desk system to the Pin-Pad for displaying said 2D code on a display of the Pin-Pad. The 2D code encodes a transaction ID and the payable amount. The transaction ID is particular to the received payment order.

In a further aspect, the invention relates to a computer-readable non-transitory storage medium of a mobile device. The storage medium comprises instructions which, when executed by a processor of the mobile device, cause the processor to execute a method comprising:

- reading a 2D code displayed on the display of the Pin-Pad by a camera of the mobile device of a user;
- evaluating the read 2D code by a payment application program of the mobile device for extracting at least a payable amount and a transaction ID of a payment of a payment item;
- displaying the extracted payment amount on the display of the mobile device;
- receiving a signal from the user being indicative of the user approving to the payment of the displayed payment amount;
- upon receipt of the signal, sending a request from the payment application program to a CG-CR application program for initiating the payment of the payment item, the request comprising at least the extracted transaction ID and a user-ID of the user.

In a further aspect, the invention relates to a computer-readable non-transitory storage medium of a first server. The storage medium comprises instructions which, when executed by a processor of the first server, cause the processor to execute a method comprising:

- receiving a payment order from a first application program of a cash desk system by a CG-CR application program, the CG-CR application program being an application program running on the first server, the first server being connected to the cash desk system via a network such as, for example, the Internet;
- upon receipt of the payment order by the CG-CR application program, generating a transaction ID and a 2D code by the CG-CR application program, the 2D code encoding the transaction ID and the payable amount, the transaction ID being particular to the received payment order;
- sending the 2D code by the CG-CR application program to the first application program.

According to embodiments of the computer-readable non-transitory storage medium of the first server, the CG-CR application program is further adapted for executing the following steps:

- storing the transaction ID in association with the payment amount and in association with a payee-ID in a mapping;
- receiving the request from the mobile device;
- extracting the transaction ID and the user-ID from the received request;
- evaluating the mapping for determining the payment amount and the payee-ID stored in association with the extracted transaction ID;
- evaluating a database of first and second banking accounts, the first banking accounts being banking accounts of registered users, the second banking accounts being banking accounts of registered payees for determining a first banking account of the user identified by the extracted user-ID and for determining a second banking account of a payee identified by the determined payee-ID; and
- sending a payment request for executing the payment of the payment order to a second server, said payment request comprising the payable amount and the first and second banking accounts, the execution of the payment to be executed by the second server.

According to embodiments, the CG-CR application program is adapted to generate a first 2D code from the received payment order, the first 2D code having a first size and first resolution, and at least a second 2D code from the received payment order, the second 2D code encoding the same content as the first 2D code but having a second size and resolution.

According to preferred embodiments, the second 2D code is adapted for display on a LCD display of a Pin-Pad comprising an ECR interface for receiving the second 2D code from an ECR interface of the cash desk system. According to embodiments, the size of the second 2D code is preferentially of a size filling the LCD display. For example, if an LCD display has a width of w pixel and a height of h pixel, h and w being integers and h being smaller than w, then the 2D code is preferentially of with w pixel and of height h pixel. According to other embodiments, the code may not fit exactly into the LCD display, e.g. in the case of a matrix code having a square shape while the display is of rectangle shape. In this case, the size of the second 2D code is adapted to fit into either the smaller one of either the height or the width of the LCD display.

According to preferred embodiments, the first 2D code is adapted for being communicated via the hardware interface of the Pin-Pad for displaying said first 2D code on the on the display of said Pin-Pad. Preferentially, the size of the first 2D code generated by the CG-CR application program is in the range of 2cmx2cm - 15cmx15cm, wherein the resolution of the first 2D code is in the range of 15dpi - 150 dpi. More preferentially, the size of the 2D code is in the range of 3cmx3cm - 10cmx10cm at a resolution between 20-100 dpi. Even more preferentially, the size of the 2D code is in the range of 4cmx4cm - 6cmx6cm at a resolution between 30-60 dpi.

According to preferred embodiments, the first 2D code is encoded as 32bit RGB image, i.e. an image wherein each pixel is specified by means of a data value of size 32 bit.

Said features are advantageous, as various versions of the 2D code are provided by the server. The payment order may comprise an indication of a device type of the Pin-Pad and/or an indication of the display type or interface type used for sending a 2D code to said display. In case it is determined that the 2D code is to be displayed on a display of a Pin-Pad, the first 2D code is generated. In case the 2D code is to be communicated via an ECR interface to a LCD display, a second 2D code is generated and returned to the first application program.

According to embodiments, the computer-readable non-transitory storage medium of the first server further comprises instructions for executing the following steps:

- receiving, by the CG-CR application program, a plurality of payment orders from a respective one of a plurality of first application programs, each first application programs running on a different one of a plurality of a cash desk systems,
- generating a 2D code and a transaction ID for each of the received payment orders; and

- sending each of the 2D codes by the CG-CR application program to the one of the plurality of first application programs from which the respective one of the payment orders was received.

In a further aspect, the invention relates to a data processing system comprising a cash desk system and a Pin-Pad being connected to said cash desk system. The cash desk system comprises a first interface being interoperable with a hardware interface of the Pin-Pad. The Pin-Pad comprises a display. The cash desk system is adapted for:

- receiving, by a first application program of the cash desk system, a payment order for the payment of a payment item, the payment order comprising an indication of a payable amount; and
- sending a 2D code by the first application program via the hardware interface to the Pin-Pad, the 2D code encoding a transaction ID and the payable amount, the transaction ID being particular to the received payment order;

The Pin-Pad is adapted for displaying said 2D code on its display.

According to preferred embodiments, the first application programs sends the payment order to a CG-CR application program. The CG-CR application program generates a 2D code being adapted for communicating said 2D code, via the hardware interface of the Pin-Pad from the first application program to the Pin-Pad for displaying said communicated 2D code on the on the display of said Pin-Pad. According to embodiments, said 2D code is generated as a 'first 2D code', and at least a further 2D code being adapted for display on another display type, e.g. an LCD display, is generated, said further 2D code being referred to as 'second 2D code'.

According to some embodiments, the first application program is adapted to generate a derivative 2D code being of reduced size and/or of reduced resolution compared to the originally received 2D code. The first application program may automatically determine that the received 2D code is too large for displaying said 2D code via the display of the Pin-Pad and may in this case automatically calculate a derivative 2D code of reduced size from the received 2D code. All method steps which are described in the following to be applied on the 2D code as received by the first application program from the CG-CR application program shall be considered as being applied, according to some embodiments, on a derivative 2D code rather than on the originally received 2D code from which said derivative 2D code was derived.

According to some embodiments, the 2D code is received from the CG-CR application program in the form of a Buffered Image in e.g. 32 bit RGB format. The first application program converts the received 2D code into an 8 bit black/white image format wherein each pixel corresponds to 8 bit of information. In a further step, said 8 bit black/white image is transformed into a 1 bit black/white image format wherein each pixel is either black or white and specified as '1' for 'black' or as '0' for 'white' (or '0' for 'black' or as '1' for 'white'). The totality of pixels of said 1 bit 2D code is encoded as a hexadecimal data value. Said data value can be communicated via the hardware interface of the Pin-Pads of a plurality of different manufacturers.

According to embodiments, the first application program is adapted for splitting the 2D code received from the CG-CR application program or a derivative thereof into a plurality of 2D code pieces, wherein the size of said pieces is smaller than a size limit. Said size limit is a hardware interface specific size limit specifying a maximum size for any piece of data to be communicated via said hardware interface of a Pin-Pad. According to embodiments, each piece of the 2D code is smaller than 1024 byte, and more preferentially smaller than 250 byte.

According to embodiments, each piece of the 2D code is transmitted to the hardware interface in the form of an array of pixels, each array element being of size 1 bit.

According to embodiments, the received or the derivative 2D code is sent to the Pin-Pad in the form of one or more pieces, e.g. in the form of one or more 1 bit pixel arrays, wherein each array element encodes one pixel of the original or the derivative 2D code. According to preferred embodiments, as many pieces of the 2D code as possible are transferred together in one transfer command to the Pin-Pad given the hardware-specific constraints of the respective hardware interface.

To comply with device-specific limitations of the hardware interface of the Pin-Pad, according to embodiments the 2D code is divided into horizontal rows of code pixels, each row being represented as pixel array. This division may be executed in a single step generating all code pieces to be transferred at once, or may be executed continuously for a sequence of bits received from an image buffer. The generated code pixel arrays are then transferred consecutively and are displayed at the appropriate positions of the display of the Pin-Pad.

According to embodiments, the determination of the number of code pixel arrays which can be transferred together in one transfer command is calculated as follows:

At first, a maximum size of a pixel transfer command is determined, said pixel transfer command being depended on the hardware interface of the Pin-Pad. For example, a hardware interface being implemented as a Verifone ECR/SSI interface imposes a limit of 250 Bytes for one transfer command for transmitting pixel data via said interface to the Verifone Pin-Pad.

In addition, the number of pixels which can be displayed in a single pixel row of the display of the Pin-Pad is determined. Said number is specific to the hardware of the display. For example, the display of said Verifone Pin-Pad may have a width of 132 pixels.

The transfer command itself may require a memory space of 6 bytes, said space being also referred to as 'command overhead'. As said space is consumed by the transfer command itself, it cannot be used to transfer pixel data.

Given said hardware constraints, the number $PL_{MAX}$ of pixel lines which can at maximum be transferred within one transfer command of the hardware interface is calculated as:

$$\text{Max. number of pixel lines transferrable in one transfer command } PL_{MAX} =$$

$$round\_off \left( \frac{maxSize\ of\ transfer\ command\ [byte]}{round\_up \left( \frac{screen\ width\ of\ Pin-Pad\ display\ [pixel]}{number\ of\ pixels\ encoded\ per\ transferred\ byte\ of\ data} \right)} \right) =$$

$$round\_off \left( \frac{250\ byte - 6\ byte}{round\_up \left( \frac{132\ px]}{8\ \frac{px}{byte}} \right)} \right) = round\_off \left( \frac{244}{round\_up(16,5\ )} \right) =$$

$$round\_off \left( \frac{244}{17} \right) = round\_off(14,4\ ) = 14.$$

Thereby, the command 'round_off means rounding down to the next lower integer value and 'round_up' means rounding a data value up to the next upper integer value.

Thus, for a display with a width of 132 pixels and a command overhead of 6 bytes for the transfer command the maximum number of pixel lines that can be filled with pixel data of the 2D code by executing one transfer command of the hardware interface is 14 lines. The above mentioned formula is applicable not only for Verifone Pin-Pads, but for a plurality of different Pin-Pads of other manufacturers also.

The 2D code is divided into pieces of 2D codes, wherein each piece corresponds to one line of pixels that can be displayed in one line (or 'row') of the Pin-Pad display. Preferentially, each piece of 2D code is a pixel array comprising as many pixels as can be displayed in one line of the Pin-Pad display. Preferentially, as many pieces of codes are transferred within one transfer command as can be packed together in said one transfer command without fragmenting any one of the pixel lines. Thus, either a piece of code corresponding to a 'line' or 'row' of code is transferred completely or not.

According to embodiments, the Pin-Pad display comprises a matrix (x,y) of pixels, wherein x is a pixel row index and y is a pixel line index. To fill the display of the Pin-Pad, a first set of 2D code pieces comprising the determined maximum number $PL_{MAX}$ pixel lines are displayed, whereby the position (0,0) of the display is used as starting position for the first transferred pixel of said first set. Then, a second set of 2D code pieces comprising said $PL_{MAX}$ number of further pixel lines is displayed, whereby the position (0,14) of the display is used as starting position for the second transferred transferred set of 2D code pieces. Said step is repeated until all pixels of the 2D code have been transferred via the hardware interface of the Pin-Pad.

According to embodiments, the data processing system further comprises a first server. The first server comprises a storage medium with a CG-CR application program and a processor. The CG-CR application program is adapted for:

- receiving the payment order from the first application program via a network;
- upon receipt of the payment order by the CG-CR application program, generating the transaction ID and the 2D code by the CG-CR application program, the 2D code encoding the transaction ID and the payable amount, the transaction ID being particular to the received payment order;
- sending the 2D code by the CG-CR application program to the first application program for enabling said first application program to send the 2D code to the Pin-Pad.

According to embodiments, the QR-code further encodes, in any combination, one or more elements being selected from a group consisting of: an address of the first server, a payee ID, an identifier of the cash desk system.

According to embodiments, payment order may in addition comprise an address of the first application program or of the cash desk system. Said address may be used by the CG-CR application program to send the generated 2D code and/or the result message to the cash desk system. According to other embodiments, the address of the first application program and/or the address of the cash desk system is stored in association with a payee-ID on a data storage accessible for the CG-CR application program. Said stored information is used by the CG-CR application program to determine the address of the payee whose cash desk system had submitted the payment order and is used for sending the generated 2D code and/or the result message to said cash desk system.

According to embodiments, upon having successfully executed the payment by the server of the financial service provider, said server sends a message to the application program of the mobile device and/or to the payment terminal. Said message is indicative of whether the payment having been successfully executed by said server of the financial services provider and/or if a timeout occurred.

**Brief description of the drawings**

In the following, embodiments of the invention are explained in greater detail by way of example, only making reference to the drawings in which:

Fig. 1     illustrates a method according to an embodiment of the invention,
Fig. 2     illustrates a data processing system comprising a cash desk system, a Pin-Pad, and a C-CR server, said cash desk system being connected to a mobile device and a server of a financial service provider via a network;
Fig. 3a    illustrates cash desk system solely operable to communicate with a Pin-Pad via a hardware interface,
Fig. 3b    illustrates cash desk system operable to communicate with a Pin-Pad via a hardware interface or an ECR interface,
Fig. 4     depicts a plurality of communicated data objects, and
Fig. 5     depicts a storage medium comprising a mapping and a banking account database.

**Detailed description**

Like numbered elements in these figures are either equivalent elements or perform the same function. Elements which have been discussed previously will not necessarily be discussed in later figures if the function is equivalent.

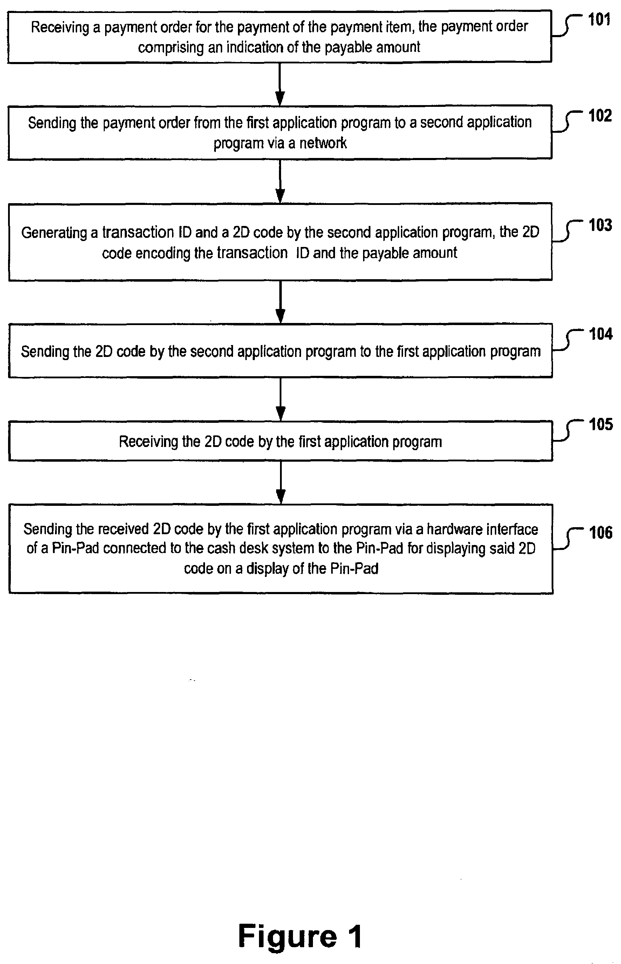

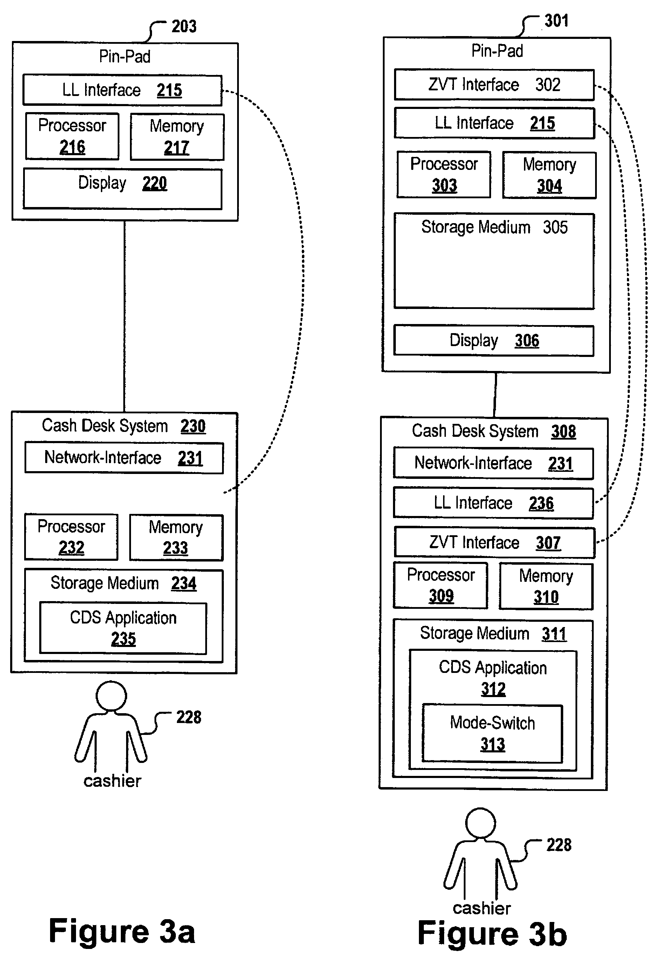

**Fig. 1** illustrates a method executed by an embodiment of a data processing system as depicted, for example, in one of the figures 1, 3a or 3b. In step 101, a first application program 235 of a cash desk system receives a payment order 401, e.g. from a bar code scanner of the cash desk system 230. The payment order comprises at least an indication of the payable amount for the payment of a payment item, e.g. some goods whose price was scanned by a bar code scanner.

In step 102, the payment order is sent from the first application program 235 of the cash desk system 230 via a network interface 231 to a second application program 209, also referred herein as CG-CR application program. The payment order may be sent to the CG-CR server 201 via network 205. In step 103 the second application program 209 generates a transaction ID being particular to the payment order. In addition, the CG-CR application program generates a 2D code, e.g. a QR code 221, 402, encoding at least the payment amount and the transaction ID.

In step 104 the generated 2D code is sent by the second application program 209 to the first application program 235. After having received the 2D code by the first application program in step 105, the received 2D code may be used to calculate a derivative 2D code of reduced size. The originally received 2D code or its derivative is sent in step 106 by the first application program to a Pin-Pad 203 being connected to the cash desk system 230. Thereby, the 2D code is sent via a hardware interface 215, referred herein also as 'low-level' (LL) interface, and its corresponding cash desk system internal interface 236, to the Pin-Pad 203.

The sent 2D code is then displayed on display 220. According to the depicted embodiment, the display shows the 2D code 221 in combination with a human readable text specifying the amount payable, in this case 33,50 €. The Pin-Pad and its display is positioned in a way ensuring that a user 229 of the mobile device 204 may catch or picture of the 2D code by means of the camera 223 of the mobile device.

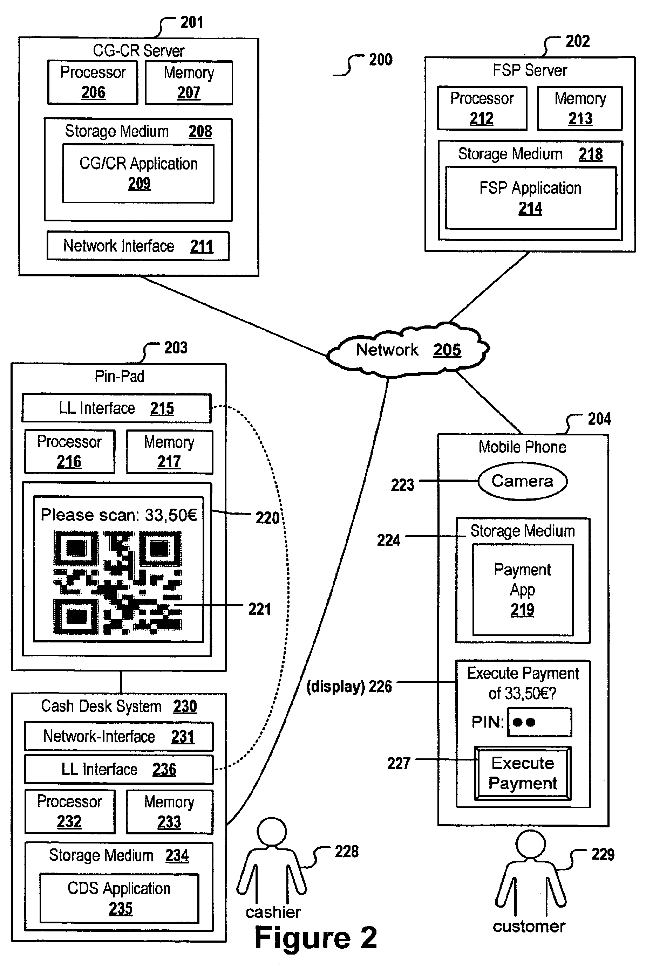

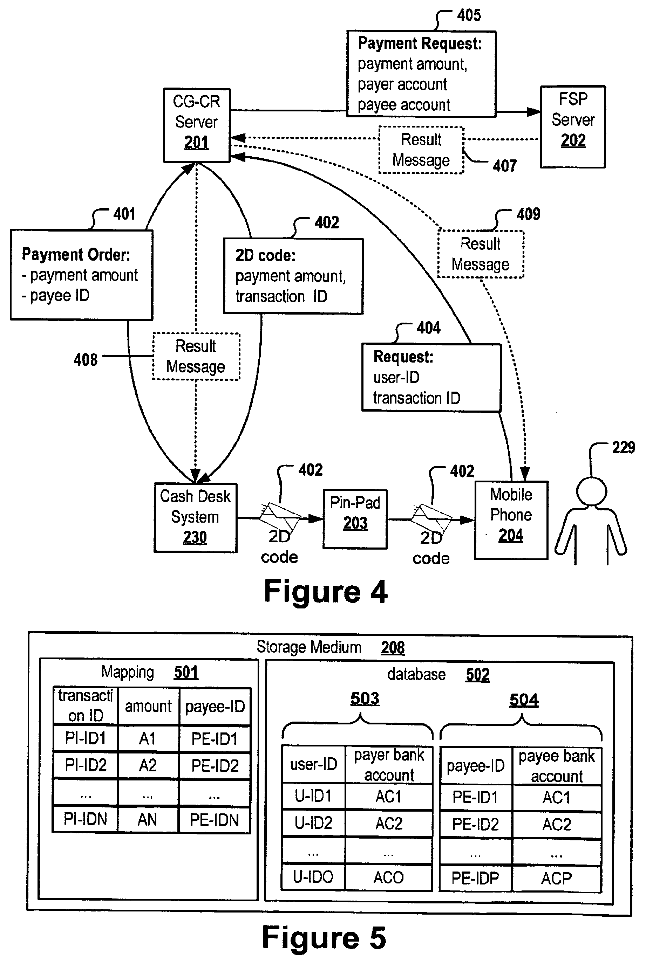

**Fig. 2** shows a data processing system comprising a Pin-Pad 203, a cash desk system 230 and a CG-CR server 201. The Pin-Pad comprises a hardware interface 215, a memory 217 and a processor 216 for executing some instructions, e.g. some transfer commands received via the interface 215. The Pin-Pad further comprises a display 220 having originally been designed for displaying text and for prompting a user for entering a PIN but which is used according to the depicted embodiment solely for showing a 2D code 221 and some human readable text. The Pin-Pad typically further comprises a number field for entering a PIN which is not shown here as it is not of relevance and not used for the purposes of embodiments of the invention. The Pin-Pad is connected to a cash desk system 213 comprising a cash desk system internal interface 236 for exchanging data with the hardware interface 215 of the Pin-Pad. That the interfaces 215 and 236 correspond to each other is indicated in figure 2 by the dotted line. The cash desk system further comprises a processor 232, a memory 233 and a storage medium 234 comprising instructions specifying a cash desk system application program 235, also referred herein as 'CDS application' or 'first application'. A user 228, e.g. a cashier, may enter a payment order into the cash desk system. The cash desk system 230 is connected via a network interface 231 to a network 205, e.g. the Internet. The CG-CR server 201 also comprises a network interface 211 enabling said server to exchange data with the cash desk system 230. The CG-CR server comprises a processor 206, a memory 207 and a storage medium 208 comprising instructions specifying a CG-CR application program 209 also referred herein as 'second application program'. The CG-CR application program is operable to receive a payment order 401 from the cash desk system 230, to generate a 2D code 402 and to send said generated 2D code back to the cash desk system as is shown in figure 4. In addition, the CG-CR application program is adapted for triggering the execution of a payment by sending a payment request 405 to a server 202 of a financial service provider. Said server 202 also comprises a processor 212, a memory 213 and a storage medium 218 comprising instructions specifying and FSP application 214 which is adapted to execute the payment transaction, thereby transferring money from a payers banking account to the payee's banking account. The FSP server is connected to the network 205, e.g. via an Ethernet card.

A user 229, e.g. a customer of a shop having employed cashier 228, may own a mobile device 204, e.g. a cellular phone. The mobile device comprises a camera 223 and a storage medium 224 comprising a payment application program 219. In addition, the mobile device comprises a display 226 allowing a user to enter a user data, e.g. log-in data, via a graphical user interface. The payment application program 219 is operable to receive image data taken from the camera 223 and is operable to extract the payment data from the image data comprising the 2D code. The payment application program 219 is further operable to display the amount payable extracted from the 2D code in human readable form on the display 226 and is operable to prompt a user to confirm the payment, e.g. by prompting the user to enter his log-in data, e.g. a PIN. The received log-in data is forwarded by the payment application program 219 via network 205 to the CG-CR application program 209, thereby allowing the user 229 to authenticate at the CG-CR application program. In case a user has successfully authenticated at the CG-CR application program and in case the user has entered user data triggering a signal being indicative that the user approves to the payment of the displayed payable amount, a request 404 for executing the payment is sent from the user's mobile phone to the GC CR server. Neither said request nor the payment order 401 comprises sensitive banking account data or any other sensitive personal information. This is because the payer as well as the payee are registered users of the CG-CR server, and the CG-CR application program is operable to determine the banking account of the payer and the payee from some user ID and payee ID and a mapping which is preferentially stored in a secure storage environment, e.g. in an encrypted database.

Fig. 3a shows a cash desk system being coupled to a Pin-Pad 203 solely comprising a hardware interface 215. The first application program 235 uses its cash desk system internal interface 236 for sending the 2D code to interface 215 of the Pin-Pad for having said 2D code displayed on the Pin-Pad's display 220.

Fig. 3b shows a cash desk system being coupled to a Pin-Pad 301 comprising, in addition to its hardware interface 215, also an ECR interface 302, also referred herein as 'high-level interface'. The cash desk system may comprise a further interface, the ECR interface 307, for exchanging data with the ECR interface 302 of the Pin-Pad 301. According to the embodiment depicted in figure 3b, the first application program 312 further comprises a mode switching module 313 being operable to determine if the Pin-Pad 301 comprises, in addition to its hardware interface, also the ECR interface 302. If so, the mode switching module 313 automatically disables the cached as a system internal ECR interface 307 and automatically activates the cash desk system internal hardware interface 236 for selectively and exclusively using said activated hardware interface for communicating with the Pin-Pad 301 and for sending the 2D code to the Pin-Pad.

Fig. 4 depicts a plurality of data objects exchange between various data processing devices. At first, a cashier may enter a payment order into a cash desk system 213. The first application program running on the cash desk system may forward the entered payment order 401 comprising at least the amounts payable and an identifier of the payee to the CG-CR application program running on the CG-CR server 201. The CG-CR application program generates a 2D code 402 comprising at least the amount payable and a transaction ID generated by the CG-CR application program in encoded form. The 2D code is sent via a network to the first application program of the cash desk system. Said first application program sends the received 2D code 402 to the Pin-Pad 203 via a hardware interface provided by a manufacturer of the Pin-Pad 203. The 2D code is displayed on the display of the Pin-Pad. Then, a mobile phone of a customer 229 may take a picture of the displayed 2D code, may decode at least some information specified in the 2D code, e.g. the payable amount, and prompt the user to agree to or reject the requested payment. In case the user indicates his consent, the payment application program running on the mobile phone generates a request 404 comprising a user ID of user 229 and comprising the transaction ID specified in the 2D code. The request is sent to the CG-CR server 201. The CG-CR application program evaluates the request and a mapping for determining banking account data of the user 229, i.e. the payer, and for determining the banking account of the payee, typically the operator of the cash desk system 230. After having determined the respective banking account data, the CG-CR application program sends a payment request 405 comprising at least the amount payable, the payer banking account and the payee banking account, to a server 202 of a financial service provider. The financial service provided by said server 202 may execute the payment and return a result message 407 to the CG-CR application program. Said result message may be indicative of whether the requested payment was executed successfully. The CG-CR application program may forward the result message 407 to the first application program of the cash desk system and/or to the payment application program running on the mobile phone 204 as indicated by the dotted arrows.

**Fig. 5** depicts a storage medium 208 being accessible by the CG-CR application program. It comprises a mapping 501 and a database 502. The mapping comprises a list of transaction IDs being unique for a particular payment order. Each of said unique transaction IDs is mapped to an amount payable and an identifier of the payee. By evaluating said mapping, any payee and payable amount for a given payment transaction can be identified given the transaction ID. Database 502 comprises first banking account data of a plurality of registered users having the role of a customer or 'payer'. In addition, second banking account data of a plurality of registered users having the role of a payee is stored in said database 502.

**Claims**

1. A computer-implemented method for the display of data allowing a payment of a payment item by means of a Pin-Pad connected to a cash desk system (230), the method comprising:

    - receiving (101), by a first application program (235) of the cash desk system (230), a payment order (401) for the payment of the payment item, the payment order comprising an indication of the payable amount;
    - calculating a maximum number $PL_{MAX}$ of pixel lines transferrable in one transfer command of a hardware interface (215) of the Pin-Pad according to:

$$PL_{MAX} = round\_off\left(\frac{maxSize\ of\ transfer\ command\ [byte]}{round\_up\left(\frac{screen\ width\ of\ Pin-Pad\ display\ [pixel]}{number\ of\ pixels\ encoded\ per\ transferred\ byte\ of\ data}\right)}\right),$$

    wherein 'round_off' means rounding a data value down to the next lower integer value;
    wherein 'round_up' means rounding a data value up to the next upper integer value;
    wherein parameter *maxSize of transfer command* [*byte*] indicates a maximum size of data in byte transferrable in said transfer command; wherein parameter screen width of Pin-Pad display [pixel] indicates a width of a display (20) of the Pin-Pad in pixel;
    wherein parameter
    *number of pixels encoded per transferred byte of data* indicates a number of pixels encoded per transferred byte of data;

    - sending (106) a 2D code by the first application program via the hardware interface (215) of the Pin-Pad to the Pin-Pad for displaying said 2D code on a display (220) of the Pin-Pad, the 2D code encoding a transaction ID and the payable amount, the transaction ID being particular to the received payment order, wherein the 2D code is divided into pieces of 2D codes, wherein each piece corresponds to one line of pixels that can be displayed in one line of the Pin-Pad display, wherein as many pieces of code are transferred within one transfer command to the Pin-Pad as can be packed together in said one transfer command without fragmenting any one of the pixel lines; and wherein the hardware interface is an interface for directly accessing functionalities of the Pin-Pad's hardware or hardware components and is defined and provided by a manufacturer of the Pin-Pad.

2. The computer-implemented method of claim 1, further comprising:

    - sending (102) the payment order from the first application program to a CG-CR application program (209), the CG-CR application program being an application program running on a first server (201) connected to the cash desk system (230) via a network (205);
    - upon receipt of the payment order by the CG-CR application program, generating (103) the transaction ID and the 2D code (221, 402) by the CG-CR application program, the 2D code encoding the transaction ID and the payable amount, the transaction ID being particular to the received payment order;
    - sending (104) the 2D code by the CG-CR application program to the first application program for enabling said first application program to send the 2D code to the Pin-Pad.

3. The computer-implemented method of claim 2, further comprising:

- receiving, by the first application program (235), the 2D code from the CG-CR application program (209), whereby the 2D code is of a predefined size and resolution;
- determining a type of the hardware interface (215) of the Pin-Pad;
- modifying the size and/or resolution of the 2D code in accordance with requirements imposed by the determined hardware interface type, wherein the step of sending the 2D code to the Pin-Pad is implemented as sending the modified 2D code to the Pin-Pad.

4. The computer-implemented method of any one of the previous claims, further comprising:

- reading the 2D code displayed on the display of the Pin-Pad by a camera (223) of a mobile device (204) of a user (229);
- evaluating the read 2D code by a payment application program (219) of the mobile device for extracting at least the payable amount and the transaction ID;
- displaying the extracted payment amount on the display (220) of the mobile device;
- receiving a signal from the user (229) being indicative of the user approving to the payment of the displayed payment amount;
- upon receipt of the signal, sending a request (404) from the payment application program (219) to the CG-CR application program (209) for initiating the payment of the payment order, the request comprising at least the extracted transaction ID and a user-ID of the user (229).

5. The computer-implemented method of claim 4, further comprising:

- prompting, by the payment application program (219), the user (229) to enter log-in data for authenticating the user at the CG-CR application program;
- sending the log-in data to the CG-CR application program via an encrypted network connection.

6. The computer-implemented method of any one of claims 2 -5, wherein the CG-CR application program (209) further executes the following steps:

- storing the transaction ID in association with the payment amount and in association with a payee-ID in a mapping (501);
- receiving the request (404) from the mobile device;
- extracting the transaction ID and the user-ID from the received request;
- evaluating the mapping (501) for determining the payment amount and the payee-ID stored in association with the extracted transaction ID;
- evaluating a database (502) of first and second banking accounts, the first banking accounts (503) being banking accounts of registered users, the second banking accounts (504) being banking accounts of registered payees for determining a first banking account of the user identified by the extracted user-ID and for determining a second banking account of a payee identified by the determined payee-ID; and
- sending a payment request (405) for executing the payment of the payment order to a second server (202), said payment request comprising the payable amount and the first and second banking accounts, the execution of the payment to be executed by the second server.

7. The computer-implemented method of any one of claims 2-6, further comprising:

- receiving, by the CG-CR application program (209), a result message (407) from the second server (202), the result message being indicative of a successful or unsuccessful execution of the execution of the payment, or of a timeout;
- forwarding the result message to the payment application program (219) and/or to the first application (235).

8. The computer-implemented method of anyone of the previous claims, further comprising:

- evaluating, by the first application program (235) a configuration for determining if the cash desk system (230) is connected to a Pin-Pad comprising an electronic cash register -ECR - interface (302) in addition to the hardware interface;
- in case the cash desk system is determined to be connected to said Pin-Pad comprising the ECR interface, automatically deactivating a cash desk system internal ECR interface (307), said cash desk system internal ECR interface being adapted for transferring data to and from the ECR interface (302), activating a cash desk system internal hardware interface (236) of the cash desk system, and selectively using said cash desk system internal hardware interface (236) by the first application program for exchanging data with said Pin-Pad.

9. The computer-implemented method of any one of the previous claims, wherein the sending of the payment order (401) to the first server and the sending of the generated 2D code from the CG-CR application program (209) to the first application program (235) is executed via an encrypted communication channel.

10. A computer-readable non-transitory storage medium (234) of a cash desk system (230), the storage medium comprising instructions which, when executed by a processor (232), cause the processor to execute a method comprising:

- receiving (101), by a first application program (235) of the cash desk system (230), a payment order (401) for the payment of a payment item, the payment order comprising an indication of the payable amount;
- calculating a maximum number $PL_{MAX}$ of pixel lines transferrable in one transfer command of a hardware interface (215) of the Pin-Pad according to:

$$PLMAX = round\_off\left(\frac{maxSize\ of\ transfer\ command\ [byte]}{round\_up\left(\frac{screen\ width\ of\ Pin-Pad\ display\ [pixel]}{number\ of\ pixels\ encoded\ per\ transferred\ byte\ of\ data}\right)}\right),$$

wherein 'round_off' means rounding a data value down to the next lower integer value;
wherein 'round_up' means rounding a data value up to the next upper integer value;
wherein parameter *maxSize of transfer command* [*byte*] indicates a maximum size of data in byte transferrable in said transfer command; wherein parameter screen width of Pin-Pad display [pixel] indicates a width of a display (20) of the Pin-Pad in pixel;
wherein parameter number of pixels encoded per transferred byte of data indicates a number of pixels encoded per transferred byte of data;

- sending (106) a 2D code by the first application program via the hardware interface (215) of a Pin-Pad connected to the cash desk system (230) to the Pin-Pad for displaying said 2D code on a display (220) of the Pin-Pad, the 2D code encoding a transaction ID and the payable amount, the transaction ID being particular to the received payment order, wherein the 2D code is divided into pieces of 2D codes, wherein each piece corresponds to one line of pixels that can be displayed in one line of the Pin-Pad display; wherein as many pieces of code are transferred within one transfer command to the Pin-Pad as can be packed together in said one transfer command without fragmenting any one of the pixel lines; and wherein the hardware interface is an interface for directly accessing functionalities of the Pin-Pad's hardware or hardware components and is defined and provided by a manufacturer of the Pin-Pad.

11. A data processing system comprising a cash desk system (230) and a Pin-Pad (203) being connected to said cash desk system,
wherein the cash desk system comprises a first interface (236) being interoperable with a hardware interface (215) of the Pin-Pad,
wherein the Pin-Pad comprises a display;
wherein the cash desk system is adapted for:

- receiving (101), by a first application program (235) of the cash desk system (230), a payment order (401) for the payment of a payment item, the payment order comprising an indication of a payable amount;
- calculating a maximum number $PL_{MAX}$ of pixel lines transferrable in one transfer command of a hardware interface (215) of the Pin-Pad according to:

$$PLMAX = round\_off\left(\frac{maxSize\ of\ transfer\ command\ [byte]}{round\_up\left(\frac{screen\ width\ of\ Pin-Pad\ display\ [pixel]}{number\ of\ pixels\ encoded\ per\ transferred\ byte\ of\ data}\right)}\right),$$

wherein 'round_off' means rounding a data value down to the next lower integer value;
wherein 'round_up' means rounding a data value up to the next upper integer value;
wherein parameter *maxSize of transfer command* [*byte*] indicates a maximum size of data in byte transferrable in said transfer command; wherein parameter screen width of Pin-Pad display [pixel] indicates a width of a display (20) of the Pin-Pad in pixel;
wherein parameter number of pixels encoded per transferred byte of data indicates a number of pixels encoded per transferred byte of data;

- sending (106) a 2D code by the first application program via the hardware interface (215) to the Pin-Pad, the 2D code encoding a transaction ID and the payable amount, the transaction ID being particular to the received payment order; wherein the 2D code is divided into pieces of 2D codes, wherein each piece corresponds to one line of pixels that can be displayed in one line of the Pin-Pad display; wherein as many pieces of code are transferred within one transfer command to the Pin-Pad as can be packed together in said one transfer command without fragmenting any one of the pixel lines;
wherein the hardware interface is an interface for directly accessing functionalities of the Pin-Pad's hardware or hardware components and is defined and provided by a manufacturer of the Pin-Pad; and wherein the Pin-Pad is adapted for displaying said 2D code on its display (220).

12. The data processing system of claim 11, further comprising a server (201) comprising a storage medium (208) with a CG-CR application program (209) and a processor (206), the CG-CR application program being adapted for:

- receiving the payment order from the first application program via a network (205);
- upon receipt of the payment order by the CG-CR application program, generating (103) the transaction ID and the 2D code (221, 402) by the CG-CR application program, the 2D code encoding the transaction ID and the payable amount, the transaction ID being particular to the received payment order;
- sending (104) the 2D code by the CG-CR application program to the first application program for enabling said first application program to send the 2D code to the Pin-Pad.


**Patentansprüche**

1. Computerimplementiertes Verfahren zur Datenanzeige, das eine Zahlung eines Zahlungspostens mithilfe eines mit einem Kassensystem (230) verbundenen PIN-Pads ermöglicht, wobei das Verfahren aufweist:

- Empfangen (101), durch ein erstes Anwendungsprogramm (235) des Kassensystems (230), eines Zahlungsauftrags (401) für die Zahlung des Zahlungspostens, bei dem der Zahlungsauftrag eine Angabe des zu zahlenden Betrags aufweist;
- Berechnen einer maximalen Zahl $PL_{MAX}$ von Pixelzeilen, die in einem einzelnen Übertragungsbefehl einer Hardware-Schnittstelle (215) des PIN-Pads übertragbar sind, gemäß:

$$PL_{MAX} = round\_off\left(\frac{\max.Größe\,von\,Übertragungsbefehl[Byte]}{round\_up\left(\frac{Bildschirmbreite\,von\,PIN-Pad-Anzeige[Pixel]}{Zahl\,der\,pro\,übertragenem\,Datenbyte\,codierten\,Pixel}\right)}\right),$$

wobei "round_off" das Abrunden eines Datenwerts auf den nächsten niedrigeren ganzzahligen Wert bedeutet;
wobei "round_up" das Aufrunden eines Datenwerts auf den nächsten höheren ganzzahligen Wert bedeutet;
wobei der Parameter *max. Größe des Übertragungsbefehls* [Byte] eine maximale Größe von Daten in Bytes bezeichnet, die in dem genannten Übertragungsbefehl übertragbar sind;
wobei der Parameter *Bildschirmbreite von PIN-Pad-Anzeige [Byte]* eine Breite einer Anzeige (20) des PIN-Pads in Pixeln bezeichnet;
wobei der Parameter *Zahl der pro übertragenem Datenbyte codierten Pixel* eine Zahl der pro übertragenem Datenbyte codierten Pixel bezeichnet;

- Senden (106) eines 2D-Codes durch das erste Anwendungsprogramm über die Hardware-Schnittstelle (215) des PIN-Pads an den PIN-Pad zum Anzeigen des genannten 2D-Codes auf einer Anzeige (220) des PIN-Pads, bei dem der 2D-Code eine Transaktionskennung und den zu zahlenden Betrag codiert, bei dem die Transaktionskennung dem empfangenen Zahlungsauftrag eigen ist, wobei der 2D-Code in 2D-Code-Stücke unterteilt wird, wobei jedes Stück einer einzelnen Pixelzeile entspricht, die in einer einzelnen Zeile der PIN-Pad-Anzeige angezeigt werden kann, wobei so viele Codestücke innerhalb eines einzelnen Übertragungsbefehls an den PIN-Pad übertragen werden, wie zusammen in den genannten einzelnen Übertragungsbefehl gesteckt werden können, ohne eine der Pixelzeilen zu fragmentieren; und wobei die Hardware-Schnittstelle eine Schnittstelle für direkten Zugriff auf Funktionalitäten der Hardware oder von Hardwareteilen des PIN-Pads ist und von einem Hersteller des PIN-Pads definiert und bereitgestellt wird.

2. Computerimplementiertes Verfahren nach Anspruch 1, das ferner aufweist:

   - Senden (102) des Zahlungsauftrags von dem ersten Anwendungsprogramm zu einem CG-CR-Anwendungsprogramm (209), bei dem das CG-CR-Anwendungsprogramm ein Anwendungsprogramm ist, das auf einem ersten Server (201) läuft, der über ein Netzwerk (205) mit dem Kassensystem (230) verbunden ist;
   - Erzeugen (103) der Transaktionskennung und des 2D-Codes (221, 402) durch das CG-CR-Anwendungsprogramm bei Empfang des Zahlungsauftrags durch das CG-CR-Anwendungsprogramm, bei dem der 2D-Code die Transaktionskennung und den zu zahlenden Betrag codiert, bei dem die Transaktionskennung dem empfangenen Zahlungsauftrag eigen ist;
   - Senden (104) des 2D-Codes durch das CG-CR-Anwendungsprogramm an das erste Anwendungsprogramm, um das genannte erste Anwendungsprogramm zu aktivieren, den 2D-Code an den PIN-Pad zu senden.

3. Computerimplementiertes Verfahren nach Anspruch 2, das ferner aufweist:

   - Empfangen des 2D-Codes von dem GC-CR-Anwendungsprogramm (209) durch das erste Anwendungsprogramm (235), wobei der 2D-Code eine vordefinierte Größe und Auflösung hat;
   - Bestimmen eines Typs der Hardware-Schnittstelle (215) des PIN-Pads;
   - Modifizieren der Größe und/oder Auflösung des 2D-Codes gemäß den von dem bestimmten Hardware-Schnittstellentyp gestellten Bedingungen, wobei der Schritt des Sendens des 2D-Codes an den PIN-Pad als Senden des modifizierten 2D-Codes an den PIN-Pad implementiert wird.

4. Computerimplementiertes Verfahren nach einem der vorhergehenden Ansprüche, das ferner aufweist:

   - Lesen des auf der Anzeige des PIN-Pads angezeigten 2D-Codes mit einer Kamera (223) eines Mobilgeräts (204) eines Benutzers (229);
   - Auswerten des gelesenen 2D-Codes durch ein Zahlungsanwendungsprogramm (219) des Mobilgeräts zum Entnehmen wenigstens des zu zahlenden Betrags und der Transaktionskennung;
   - Anzeigen des entnommenen Zahlungsbetrags auf der Anzeige (220) des Mobilgeräts;
   - Empfangen eines Signals von dem Benutzer (229), das angibt, dass der Benutzer die Zahlung des angezeigten Zahlungsbetrags genehmigt;
   - bei Empfang des Signals Senden einer Anforderung (404) von dem Zahlungsanwendungsprogramm (219) an das CG-CR-Anwendungsprogramm (209) zum Einleiten der Zahlung des Zahlungsauftrags, bei dem die Anforderung wenigstens die entnommene Transaktionskennung und eine Benutzerkennung des Benutzers (229) aufweist.

5. Computerimplementiertes Verfahren nach Anspruch 4, das ferner aufweist:

   - Auffordern des Benutzers (229) durch das Zahlungsanwendungsprogramm (219) zur Eingabe von Login-Daten zur Authentifizierung des Benutzers am CG-CR-Anwendungsprogramm;
   - Senden der Login-Daten über eine verschlüsselte Netzwerkverbindung an das CG-CR-Anwendungsprogramm.

6. Computerimplementiertes Verfahren nach einem der Ansprüche 2 bis 5, wobei das CG-CR-Anwendungsprogramm (209) ferner die folgenden Schritte ausführt:

   - Speichern der Transaktionskennung in Zuordnung zu dem Zahlungsbetrag und in Zuordnung zu einer Zahlungsempfängerkennung in einem Mapping (501) ;
   - Empfangen der Anforderung (404) von dem Mobilgerät;
   - Entnehmen der Transaktionskennung und der Benutzerkennung aus der empfangenen Anforderung;
   - Auswerten des Mappings (501) zum Bestimmen des/der in Zuordnung zu der entnommenen Transaktions-

EP 2 631 860 B1

kennung gespeicherten Zahlungsbetrags und Zahlungsempfängerkennung;
- Auswerten einer Datenbank (502) erster und zweiten Bankkonten, bei dem die ersten Bankkonten (503) Bankkonten registrierter Benutzer sind, die zweiten Bankkonten (504) Bankkonten registrierter Zahlungsempfänger sind, zum Bestimmen eines von der entnommenen Benutzerkennung gekennzeichneten ersten Bankkontos des Benutzers und zum Bestimmen eines von der entnommenen Zahlungsempfängerkennung gekennzeichneten zweiten Bankkontos; und
- Senden einer Zahlungsaufforderung (405) zur Ausführung der Zahlung des Zahlungsauftrags an einen zweiten Server (202), bei dem die genannte Zahlungsaufforderung den zu zahlenden Betrag und das erste und zweite Bankkonto aufweist, bei dem die Ausführung der Zahlung von dem zweiten Server auszuführen ist.

7. Computerimplementiertes Verfahren nach einem der Ansprüche 2 bis 6, das ferner aufweist:

- Empfangen durch das CG-CR-Anwendungsprogramm (209) einer Ergebnisnachricht (407) von dem zweiten Server (202), bei dem die Ergebnisnachricht eine erfolgreiche oder erfolglose Ausführung der Ausführung der Zahlung oder eine Zeitüberschreitung erkennen lässt;
- Weiterleiten der Ergebnisnachricht an das Zahlungsanwendungsprogramm (219) und/oder die erste Anwendung (235).

8. Computerimplementiertes Verfahren nach einem der vorhergehenden Ansprüche, ferner aufweisend:

- Auswerten durch das erste Anwendungsprogramm (235) einer Konfiguration zum Bestimmen, ob das Kassensystem (230) mit einem PIN-Pad verbunden ist, der zusätzlich zur Hardware-Schnittstelle eine Schnittstelle (302) für elektronische Registrierkassen (ECR) aufweist;
- falls das Kassensystem zum Verbinden mit dem genannten, die ECR-Schnittstelle aufweisenden PIN-Pad bestimmt wird, automatisches Deaktivieren einer internen Kassensystem-ECR-Schnittstelle (307), bei dem die genannte interne Kassensystem-ECR-Schnittstelle ausgeführt ist zum Übertragen von Daten zu und von der ECR-Schnittstelle (302), Aktivieren einer internen Kassensystem-Hardware-Schnittstelle (236) des Kassensystems und selektiven Verwenden der genannten internen Kassensystem-Hardware-Schnittstelle (236) durch das erste Anwendungsprogramm für den Datenaustausch mit dem genannten PIN-Pad.

9. Computerimplementiertes Verfahren nach einem der vorhergehenden Ansprüche, wobei das Senden des Zahlungsauftrags (401) an den ersten Server und das Senden des erzeugten 2D-Codes von dem CG-CR-Anwendungsprogramm (209) an das erste Anwendungsprogramm (235) über einen verschlüsselten Kommunikationskanal ausgeführt wird.

10. Computerlesbares nichtflüchtiges Speichermedium (234) eines Kassensystems (230), bei dem das Speichermedium Anweisungen aufweist, die bei Ausführung durch einen Prozessor (232) den Prozessor zur Ausführung eines Verfahrens veranlassen, das aufweist:

- Empfangen (101), durch ein erstes Anwendungsprogramm (235) des Kassensystems (230), eines Zahlungsauftrags (401) für die Zahlung eines Zahlungspostens, bei dem der Zahlungsauftrag eine Angabe des zu zahlenden Betrags aufweist;
- Berechnen einer maximalen Zahl $PL_{MAX}$ von Pixelzeilen, die in einem einzelnen Übertragungsbefehl einer Hardware-Schnittstelle (215) des PIN-Pads übertragbar sind, gemäß:

$$PL_{MAX} = round\_off\left(\frac{\max. Größe\, von\, Übertragungsbefehl\, [Byte]}{round\_up\left(\frac{Bildschirmbreite\, von\, PIN-Pad-Anzeige\, [Pixel]}{Zahl\, der\, pro\, übertragenem\, Datenbyte\, codierten\, Pixel}\right)}\right),$$

wobei "round_off3 das Abrunden eines Datenwerts auf den nächsten niedrigeren ganzzahligen Wert bedeutet;
wobei "round_up" das Aufrunden eines Datenwerts auf den nächsten höheren ganzzahligen Wert bedeutet;
wobei der Parameter max. Größe des Übertragungsbefehls [Byte] eine maximale Größe von Daten in Bytes

17

bezeichnet, die in dem genannten Übertragungsbefehl übertragbar sind;

wobei der Parameter *Bildschirmbreite von PIN-Pad-Anzeige [Byte]* eine Breite einer Anzeige (20) des PIN-Pads in Pixeln bezeichnet;

wobei der Parameter *Zahl der pro übertragenem Datenbyte codierten Pixel* eine Zahl der pro übertragenem Datenbyte codierten Pixel bezeichnet;

- Senden (106) eines 2D-Codes durch das erste Anwendungsprogramm über die mit dem Kassensystem (230) verbundene Hardware-Schnittstelle (215) des PIN-Pads an den PIN-Pad zum Anzeigen des genannten 2D-Codes auf einer Anzeige (220) des PIN-Pads, bei dem der 2D-Code eine Transaktionskennung und den zu zahlenden Betrag codiert, bei dem die Transaktionskennung dem empfangenen Zahlungsauftrag eigen ist, wobei der 2D-Code in 2D-Code-Stücke unterteilt wird, wobei jedes Stück einer einzelnen Pixelzeile entspricht, die in einer einzelnen Zeile der PIN-Pad-Anzeige angezeigt werden kann; wobei so viele Codestücke innerhalb eines einzelnen Übertragungsbefehls an den PIN-Pad übertragen werden, wie zusammen in den genannten einzelnen Übertragungsbefehl gesteckt werden können, ohne eine der Pixelzeilen zu fragmentieren; und wobei die Hardware-Schnittstelle eine Schnittstelle für direkten Zugriff auf Funktionalitäten der Hardware oder von Hardwareteilen des PIN-Pads ist und von einem Hersteller des PIN-Pads definiert und bereitgestellt wird.

11. Datenverarbeitungssystem, das ein Kassensystem (230) und einen mit dem genannten Kassensystem verbundenen PIN-Pad (203) aufweist,

wobei das Kassensystem eine erste Schnittstelle (236) aufweist, die zur Zusammenarbeit mit einer Hardware-Schnittstelle (215) des PIN-Pads fähig ist,

wobei der PIN-Pad eine Anzeige aufweist;

wobei das Kassensystem ausgeführt ist zum:

- Empfangen (101), durch ein erstes Anwendungsprogramm (235) des Kassensystems (230), eines Zahlungsauftrags (401) für die Zahlung des Zahlungspostens, bei dem der Zahlungsauftrag eine Angabe des zu zahlenden Betrags aufweist;

- Berechnen einer maximalen Zahl $PL_{MAX}$ von Pixelzeilen, die in einem einzelnen Übertragungsbefehl einer Hardware-Schnittstelle (215) des PIN-Pads übertragbar sind, gemäß:

$$PL_{MAX} = round\_off\left(\frac{\max.\,Gr\ddot{o}\beta e\,von\,\ddot{U}bertragungsbefehl\,[Byte]}{round\_up\left(\frac{Bildschirmbreite\,von\,PIN-Pad-Anzeige\,[Pixel]}{Zahl\,der\,pro\,\ddot{u}bertragenem\,Datenbyte\,codierten\,Pixel}\right)}\right),$$

wobei "round_off" das Abrunden eines Datenwerts auf den nächsten niedrigeren ganzzahligen Wert bedeutet;

wobei "round_up" Aufrunden eines Datenwerts auf den nächsten höheren ganzzahligen Wert bedeutet;

wobei der Parameter *max. Größe des Übertragungsbefehls [Byte]* eine maximale Größe von Daten in Bytes bezeichnet, die in dem genannten Übertragungsbefehl übertragbar sind;

wobei der Parameter *Bildschirmbreite von PIN-Pad-Anzeige [Byte]* eine Breite einer Anzeige (20) des PIN-Pads in Pixeln bezeichnet;

wobei der Parameter *Zahl der pro übertragenem Datenbyte codierten Pixel* eine Zahl der pro übertragenem Datenbyte codierten Pixel bezeichnet;

- Senden (106) eines 2D-Codes durch das erste Anwendungsprogramm über die Hardware-Schnittstelle (215) des PIN-Pads an den PIN-Pad, bei dem der 2D-Code eine Transaktionskennung und den zu zahlenden Betrag codiert, bei dem die Transaktionskennung dem empfangenen Zahlungsauftrag eigen ist; wobei der 2D-Code in 2D-Code-Stücke unterteilt wird, wobei jedes Stück einer einzelnen Pixelzeile entspricht, die in einer einzelnen Zeile der PIN-Pad-Anzeige angezeigt werden kann; wobei so viele Codestücke innerhalb eines einzelnen Übertragungsbefehls an den PIN-Pad übertragen werden, wie zusammen in den genannten einzelnen Übertragungsbefehl gesteckt werden können, ohne eine der Pixelzeilen zu fragmentieren; wobei die Hardware-Schnittstelle eine Schnittstelle für direkten Zugriff auf Funktionalitäten der Hardware oder von Hardwareteilen des PIN-Pads ist und von einem Hersteller des PIN-Pads definiert und bereitgestellt wird und wobei der PIN-Pad zum Anzeigen des genannten 2D-Codes auf seiner Anzeige (220) ausgeführt ist.

**12.** Datenverarbeitungssystem nach Anspruch 11, das ferner einen Server (201) aufweist, der ein Speichermedium (208) mit einem CG-CR-Anwendungsprogramm (209) und einen Prozessor (206) aufweist, bei dem das CG-CR-Anwendungsprogramm ausgeführt ist zum:

- Empfangen des Zahlungsauftrags über ein Netzwerk (205) von dem ersten Anwendungsprogramm;
- Erzeugen (103) der Transaktionskennung und des 2D-Codes (221, 402) durch das CG-CR-Anwendungsprogramm bei Empfang des Zahlungsauftrags durch das CG-CR-Anwendungsprogramm, bei dem der 2D-Code die Transaktionskennung und den zu zahlenden Betrag codiert, bei dem die Transaktionskennung dem empfangenen Zahlungsauftrag eigen ist;
- Senden (104) des 2D-Codes durch das CG-CR-Anwendungsprogramm an das erste Anwendungsprogramm, um das genannte erste Anwendungsprogramm zu aktivieren, den 2D-Code an den PIN-Pad zu senden.

**Revendications**

**1.** Procédé mis en oeuvre par ordinateur pour l'affichage de données autorisant le paiement d'un article à régler au moyen d'un clavier NIP connecté à un système d'encaissement (230), le procédé comprenant :

- la réception (101), par un premier programme d'application (235) du système d'encaissement (230), d'un ordre de paiement (401) pour le paiement de l'article à régler, l'ordre de paiement comprenant l'indication du montant à payer ;
- le calcul d'un nombre maximum $PL_{MAX}$ de lignes de pixel transférables dans une commande de transfert d'une interface matérielle (215) du clavier NIP selon :

$$PL_{MAX} = arrondi\ bas\ de\ \left( \frac{taille\ maximale\ de\ la\ commande\ de\ transfert\ [byte]}{arrondi\ haut\ de\ \left( \frac{largeur\ d'écran\ de\ l'affichage\ du\ clavier\ NIP\ [pixel]}{nombre\ de\ pixels\ encodés\ par\ byte\ de\ donnée\ transféré} \right)} \right),$$

où « arrondi bas » représente l'arrondi de la valeur de la donnée au niveau inférieur par rapport à la valeur entière inférieure suivante ;
où « arrondi haut » représente l'arrondi de la valeur de la donnée au niveau supérieur par rapport à la valeur entière supérieure suivante ;
où le paramètre *taille maximale de la commande de transfert [byte]* est l'indication de la taille maximale des données par byte transférable dans ladite commande de transfert ;
où le paramètre largeur d'écran de l'affichage du clavier NIP [pixel] est l'indication de la largeur de l'affichage (20) du clavier NIP en pixel ;
où le paramètre *nombre de pixels encodés par byte de donnée transféré* est l'indication du nombre de pixels encodés par byte de donnée transféré ;

- l'envoi (106) d'un code-barres 2 D par le premier programme d'application via l'interface matérielle (215) du clavier NIP vers le clavier NIP pour afficher ledit code-barres 2 D sur un écran (220) du clavier NIP, le code-barres 2 D encodant un identifiant d'une transaction et le montant à payer, l'identifiant de la transaction étant spécifique à l'ordre de paiement reçu, où le code-barres 2 D est divisé en pièces de codes bidimensionnelles, où chacune des pièces correspond à une ligne de pixels qui peut être affichée sur une ligne de l'écran du clavier NIP, où autant de pièces du code sont transférées dans une commande de transfert vers le clavier NIP qu'autant peuvent être empilées ensemble dans ladite une commande de transfert sans fragmenter l'une quelconque des lignes de pixels, et où l'interface matérielle est une interface pour accéder directement aux fonctionnalités du matériel du clavier NIP ou des composants matériels et est définie et fournie par le fabricant du clavier NIP.

**2.** Procédé mis en oeuvre par ordinateur selon la revendication 1, comprenant en outre :

- l'envoi (102) de l'ordre de paiement à partir du premier programme d'application vers un programme d'application CG-CR (209), le programme d'application CG-CR étant un programme d'application fonctionnant sur un premier serveur (201) relié au système d'encaissement (230) via un réseau (205) ;
- après la réception de l'ordre de paiement par le programme d'application CG-CR, la création (103) de l'identifiant de la transaction et du code-barres 2 D (221, 402) par le programme d'application CG-CR, le code-barres 2 D encodant l'identifiant de la transaction et le montant à régler, l'identifiant de la transaction étant spécifique à l'ordre de paiement reçu ;
- l'envoi (104) du code-barres 2 D par le programme d'application CG-CR au premier programme d'application pour autoriser ledit premier programme d'application à envoyer le code-barres 2 D au clavier NIP.

3. Procédé mis en oeuvre par ordinateur selon la revendication 2, comprenant en outre :

- la réception, par le premier programme d'application (235), du code-barres 2 D en provenance du programme d'application CG-CR (209), par lequel le code-barres 2 D est d'une dimension et d'une résolution prédéfinies ;
- la détermination d'un type de l'interface matérielle (215) du clavier NIP ;
- la modification de la taille et/ou de la résolution du code-barres 2 D conformément aux critères imposés par le type de l'interface matérielle déterminé, où l'étape de l'envoi du code-barres 2 D au clavier NIP est mise en oeuvre en tant qu'envoi du code-barres 2 D modifié vers le clavier NIP.

4. Procédé mis en oeuvre par ordinateur selon l'une quelconque des revendications précédentes, comprenant en outre :

- la lecture du code-barres 2 D affiché sur l'écran du clavier NIP par une caméra (223) d'un dispositif mobile (204) d'un utilisateur (229) ;
- l'évaluation du code-barres 2 D lu par un programme d'application de paiement (219) du dispositif mobile pour extraire au moins le montant à régler et l'identifiant de la transaction ;
- l'affichage du montant du paiement extrait sur l'écran (220) du dispositif mobile ;
- la réception d'un signal en provenance de l'utilisateur (229) indiquant que l'utilisateur accepte le paiement du montant à régler affiché ;
- après la réception du signal, l'envoi d'une requête (404) à partir du programme d'application de paiement (219) à destination du programme d'application CG-CR (209) pour initier le paiement de l'ordre de paiement, la requête comprenant au moins l'identifiant de la transaction extrait et l'identifiant d'utilisateur de l'utilisateur (229).

5. Procédé mis en oeuvre par ordinateur selon la revendication 4, comprenant en outre :

- l'invitation, par le programme d'application de paiement (219), de l'utilisateur (229) à entrer ses données de connexion afin d'authentifier l'utilisateur au niveau du programme d'application CG-CR ;
- l'envoi des données de connexion au programme d'application CG-CR via une connexion de réseau cryptée.

6. Procédé mis en oeuvre par ordinateur selon l'une quelconque des revendications 2 à 5, dans lequel le programme d'application CG-CR (209) exécute en outre les étapes suivantes :

- stockage de l'identifiant de la transaction associé au montant à payer et associé à l'identifiant du bénéficiaire mis en correspondance (501) ;
- réception de la requête (404) en provenance du dispositif mobile ;
- extraction de l'identifiant de la transaction et de l'identifiant de l'utilisateur en provenance de la requête reçue ;
- évaluation de la mise en correspondance (501) afin de déterminer le montant à régler et l'identifiant du bénéficiaire stockés en association avec l'identifiant de la transaction extrait ;
- évaluation de la base de données (502) des premiers et des seconds comptes bancaires, les premiers comptes bancaires (503) étant les comptes bancaires des utilisateurs enregistrés, les seconds comptes bancaires (504) étant les comptes bancaires des bénéficiaires enregistrés pour déterminer le premier compte bancaire de l'utilisateur identifié par l'identifiant utilisateur extrait et pour déterminer le second compte bancaire du bénéficiaire identifié par l'identifiant bénéficiaire déterminé ; et
- envoi d'une requête de paiement (405) pour exécuter le paiement de l'ordre de paiement vers un second serveur (202), ladite requête de paiement comprenant le montant à régler et le premier et le second compte bancaire, l'exécution du paiement devant être réalisée par le second serveur.

7. Procédé mis en oeuvre par ordinateur selon l'une quelconque des revendications 2 à 6, comprenant en outre :

- la réception, par le programme d'application CG-CR (209), d'un message de résultat (407) en provenance du second serveur (202), le message de résultat indiquant la réussite ou non de l'exécution du paiement, ou une temporisation ;

- le transfert du message de résultat vers le programme d'application CG-CR (209) et/ou vers la première application (235).

8. Procédé mis en oeuvre par ordinateur selon l'une quelconque des revendications précédentes, comprenant en outre :

- l'évaluation, par le premier programme d'application (235), d'une configuration pour déterminer si le système d'encaissement (230) est relié à un clavier NIP comprenant une interface de caisse enregistreuse électronique ECR (302) en plus de l'interface matérielle ;
- dans le cas où il est avéré que le système d'encaissement est connecté audit clavier NIP comprenant l'interface ECR, la désactivation automatique de l'interface ECR (307) interne au système d'encaissement, ladite interface ECR interne au système d'encaissement étant adapté pour transférer les données vers et à partir de l'interface ECR (302), l'activation de l'interface matérielle (236) interne au système d'encaissement, et l'utilisation de manière sélective de ladite l'interface matérielle (236) interne au système d'encaissement par le premier programme d'application pour échanger des données avec ledit clavier NIP.

9. Procédé mis en oeuvre par ordinateur selon l'une quelconque des revendications précédentes, dans lequel l'envoi de l'ordre de paiement (401) au premier serveur et l'envoi du code-barres 2 D créé à partir du programme d'application CG-CR (209) vers le premier programme d'application (235) sont exécutés via un canal de communication crypté.

10. Support de stockage non transitoire lisible par ordinateur (234) d'un système d'encaissement (230), le système de stockage comprenant les instructions qui, quand elles sont exécutées par un processeur (232), conduisent le processeur à exécuter le procédé comprenant :

- la réception (101), par un premier programme d'application (235) du système d'encaissement (230), d'un ordre de paiement (401) pour le paiement de l'article à régler, l'ordre de paiement comprenant l'indication du montant à payer ;
- le calcul d'un nombre maximum $PL_{MAX}$ de lignes de pixel transférables dans une commande de transfert d'une interface matérielle (215) du clavier NIP selon :

$$PL_{MAX} = arrondi\ bas\ de\left(\frac{taille\ maximale\ de\ la\ commande\ de\ transfert\ [byte]}{arrondi\ haut\ de\left(\frac{largeur\ d'écran\ de\ l'affichage\ du\ clavier\ NIP\ [pixel]}{nombre\ de\ pixels\ encodés\ par\ byte\ de\ donnée\ transféré}\right)}\right),$$

où « arrondi bas » représente l'arrondi de la valeur de la donnée au niveau inférieur par rapport à la valeur entière inférieure suivante ;
où « arrondi haut » représente l'arrondi de la valeur de la donnée au niveau supérieur par rapport à la valeur entière supérieure suivante ;
où le paramètre *taille maximale de la commande de transfert [byte]* est l'indication de la taille maximale des données par byte transférable dans ladite commande de transfert ;
OÙ le paramètre largeur d'écran de l'affichage du clavier NIP [pixel] est l'indication de la largeur de l'affichage (20) du clavier NIP en pixel ;
où le paramètre nombre de pixels encodés par byte de donnée transféré est l'indication du nombre de pixels encodés par byte de donnée transféré ;

- l'envoi (106) d'un code-barres 2 D par le premier programme d'application via l'interface matérielle (215) du clavier NIP connecté au système d'encaissement (230) vers le clavier NIP pour afficher ledit code-barres 2 D sur l'écran (220) du clavier NIP, le code-barres 2 D encodant l'identifiant de la transaction et le montant à payer, l'identifiant de la transaction étant spécifique à l'ordre de paiement reçu, où le code-barres 2 D est divisé en pièces de codes bidimensionnelles, où chacune des pièces correspond à une ligne de pixels qui peut être affichée sur une ligne de l'écran du clavier NIP, où autant de pièces du code sont transférées dans une commande de transfert vers le clavier NIP, qu'autant peuvent être empilées ensemble dans ladite une commande de transfert sans fragmenter l'une quelconque des lignes de pixels, et où l'interface matérielle est une interface pour accéder directement aux fonctionnalités du matériel du clavier NIP ou des composants matériels et est définie et fournie par le fabricant du clavier NIP.

**11.** Système de traitement des données comprenant un système d'encaissement (230) et un clavier NIP (203) étant connecté audit système d'encaissement,

où le système d'encaissement comprend une première interface (236) étant interopérable avec l'interface matérielle (215) du clavier NIP,

où le clavier NIP comprend un écran ;

où le système d'encaissement est adapté pour :

- la réception (101), par un premier programme d'application (235) du système d'encaissement (230), d'un ordre de paiement (401) pour le paiement de l'article à régler, l'ordre de paiement comprenant l'indication du montant à payer ;
- le calcul d'un nombre maximum PL$_{MAX}$ de lignes de pixel transférables dans une commande de transfert d'une interface matérielle (215) du clavier NIP selon :

$$PL_{MAX} = \textit{arrondi bas de} \left( \frac{\textit{taille maximale de la commande de transfert [byte]}}{\textit{arrondi haut de} \left( \frac{\textit{largeur d'écran de l'affichage du clavier NIP [pixel]}}{\textit{nombre de pixels encodés par byte de donnée transféré}} \right)} \right),$$

où « arrondi bas » représente l'arrondi de la valeur de la donnée au niveau inférieur par rapport à la valeur entière inférieure suivante ;

où « arrondi haut » représente l'arrondi de la valeur de la donnée au niveau supérieur par rapport à la valeur entière supérieure suivante ;

où le paramètre *taille maximale de la commande de transfert [byte]* est l'indication de la taille maximale des données par byte transférable dans ladite commande de transfert ;

où le paramètre largeur d'écran de l'affichage du clavier NIP [pixel] est l'indication de la largeur de l'affichage (20) du clavier NIP en pixel ;

où le paramètre nombre de pixels encodés par byte de donnée transféré est l'indication du nombre de pixels encodés par byte de donnée transféré ;

- l'envoi (106) d'un code-barres 2 D par le premier programme d'application via l'interface matérielle (215) du clavier NIP, le code-barres 2 D encodant l'identifiant de la transaction et le montant à payer, l'identifiant de la transaction étant spécifique à l'ordre de paiement reçu, où le code-barres 2 D est divisé en pièces de codes bidimensionnelles, où chacune des pièces correspond à une ligne de pixels qui peut être affichée sur une ligne de l'écran du clavier NIP, où autant de pièces du code sont transférées dans une commande de transfert vers le clavier NIP, qu'autant peuvent être empilées ensemble dans ladite une commande de transfert sans fragmenter l'une quelconque des lignes de pixels, où l'interface matérielle est une interface pour accéder directement aux fonctionnalités du matériel du clavier NIP ou des composants matériels et est définie et fournie par le fabricant du clavier NIP ; et où le clavier NIP est adapté pour afficher ledit code-barres 2 D sur son écran (220).

**12.** Système de traitement des données selon la revendication 11, comprenant en outre un serveur (201) comprenant un support de stockage (208) avec un programme d'application CG-CR (209) et un processeur (206), le programme d'application CG-CR étant adapté pour :

- la réception de l'ordre de paiement à partir du premier programme d'application via un réseau (205) ;
- après réception de l'ordre de paiement par le programme d'application CG-CR, la création (103) de l'identifiant de la transaction et du code-barres 2 D (221, 402) par le programme d'application CG-CR, le code-barres 2 D encodant l'identifiant de la transaction et le montant à régler, l'identifiant de la transaction étant spécifique à l'ordre de paiement reçu ;
- l'envoi (104) du code-barres 2 D par le programme d'application CG-CR au premier programme d'application pour autoriser ledit premier programme d'application à envoyer le code-barres 2 D au clavier NIP.

Receiving a payment order for the payment of the payment item, the payment order comprising an indication of the payable amount ⟋ 101

↓

Sending the payment order from the first application program to a second application program via a network ⟋ 102

↓

Generating a transaction ID and a 2D code by the second application program, the 2D code encoding the transaction ID and the payable amount ⟋ 103

↓

Sending the 2D code by the second application program to the first application program ⟋ 104

↓

Receiving the 2D code by the first application program ⟋ 105

↓

Sending the received 2D code by the first application program via a hardware interface of a Pin-Pad connected to the cash desk system to the Pin-Pad for displaying said 2D code on a display of the Pin-Pad ⟋ 106

# Figure 1

**Figure 2**

203

**Pin-Pad**

LL Interface  **215**

| Processor **216** | Memory **217** |

Display  **220**

**Cash Desk System  230**

Network-Interface  **231**

| Processor **232** | Memory **233** |

Storage Medium  **234**

CDS Application **235**

228

cashier

# Figure 3a

301

**Pin-Pad**

ZVT Interface  **302**

LL Interface  **215**

| Processor **303** | Memory **304** |

Storage Medium  305

Display  **306**

**Cash Desk System  308**

Network-Interface  **231**

LL Interface  **236**

ZVT Interface  **307**

| Processor **309** | Memory **310** |

Storage Medium  **311**

CDS Application **312**

Mode-Switch **313**

228

cashier

# Figure 3b

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19903822 A1
- US 20110137742 A
- US 20110251892 A
- JP 2002109421 A

### Non-patent literature cited in the description

- Verifone PP interface. *Design Specification External User interface HSM-CDF,* 24 November 2009
- *Electronic Cash Register/Self service Machine,* 18 November 2011
- *Extended PinPad Interface,* 08 August 2011